# EUROPÄISCHE PATENTSCHRIFT

(11) **EP 1 105 336 B1**
(45) Veröffentlichungstag und Bekanntmachung des Hinweises auf die Patenterteilung: **26.03.2003**
(21) Anmeldenummer: 99939456.2
(22) Anmeldetag: 07.08.1999
(51) Int. Cl.: B65H 75/42

(54) **HOCHDRUCKREINIGUNGSGERÄT**
HIGH PRESSURE CLEANING DEVICE
APPAREIL DE NETTOYAGE A HAUTE PRESSION

(30) Priorität: 17.08.1998 DE 19837088
(43) Veröffentlichungstag der Anmeldung: 13.06.2001
(73) Patentinhaber: Alfred Kärcher GmbH & Co., 71364 Winnenden (DE)
(72) Erfinder: DIRNBERGER, Sven, D-71672 Marbach (DE); GROSSER, Ralf, D-73441 Bopfingen (DE); KLÖPFER, Jürgen, D-71576 Burgstetten 2 (DE)
(74) Vertreter: Böhme, Ulrich, Dr. Dipl.-Phys.
(86) Internationale Anmeldenummer: EP9905718
(87) Internationale Veröffentlichungsnummer: WO00010901

(56) Entgegenhaltungen:
- WO-A-96/16891
- DE-A- 3 940 543
- US-A- 4 053 118

## Beschreibung

Die Erfindung betrifft ein Hochdruckreinigungsgerät mit einem Gehäuse, mit einer Antriebseinheit und mit einer Wickelvorrichtung zum Auf- und Abwickeln von Leitungen, die von feststehenden Anschlüssen zu beweglichen Anschlüssen geführt sind.

Üblicherweise weisen Hochdruckreinigungsgeräte eine elektrisch betriebene Hochdruckpumpe auf. Zum Betrieb muß diese mit einer Spannungsversorgungseinheit verbunden werden. In der Regel dienen hierzu elektrische Kabel, beispielsweise Verlängerungskabel, die das Hochdruckreinigungsgerät mit einer elektrischen Steckdose verbinden. Bei Anschlußkabeln, die fest mit dem Hochdruckreinigungsgerät verbunden sind, ist vielfach eine Wickelvorrichtung vorgesehen, die Vorsprünge in Zapfenform am Gehäuse des Hochdruckreinigungsgeräts aufweist, um die herum das Anschlußkabel auf- und abgewickelt werden kann. Hochdruckreinigungsgeräte mit derartigen Wickelvorrichtungen haben den Nachteil, daß das Anschlußkabel umständlich von Hand auf- und wieder abgewickelt werden muß und daß das Anschlußkabel im aufgewickelten Zustand ungeschützt am äußeren Gehäuse angeordnet ist.

In der DE 39 40 543 A1 ist ein Hochdruckreinigungsgerät beschrieben, bei dem ein Flüssigkeitszufuhrschlauch und ein elektrisches Versorgungskabel auf nebeneinanderliegende Schlauchtrommeln aufgewickelt werden können, die eine erhebliche Breite aufweisen und daher einen großen Platzbedarf haben.

Es ist auch bekannt, Elektrokabel auf zwei nebeneinanderliegenden Kabeltrommeln aufzuwickeln, von denen eine sehr breit und eine sehr schmal ausgebildet ist (WO 96/16891). Auch diese Kabeltrommeln haben einen erheblichen Platzbedarf, da eine Kabeltrommel in radialer Richtung sehr groß ist, die andere in axialer Richtung.

Es ist Aufgabe der Erfindung, ein Hochdruckreinigungsgerät der gattungsgemäßen Art so auszugestalten, daß Leitungen, die von dem Hochdruckreinigungsgerät wegführen, sicher und einfach auf- und abgewickelt werden können und daß die Wickelvorrichtungen einen möglichst geringen Platzbedarf aufweisen.

Diese Aufgabe wird bei einem Hochdruckreinigungsgerät der eingangs beschriebenen Art erfindungsgemäß dadurch gelöst, daß die Wickelvorrichtung eine Wickeltrommel umfaßt, daß die Wickeltrommel mindestens zwei getrennte Wickelbereiche aufweist, die nur so breit sind, daß darin Kabel einlagig schichtweise übereinanderliegend aufwickelbar sind, daß in dem einen Wickelbereich ein elektrisches Verbindungskabel zur Herstellung einer Verbindung zu einem relativ zur Wickelvorrichtung feststehenden Anschluß aufwickelbar ist, daß in dem anderen Wickelbereich ein elektrisches Anschlußkabel zur Herstellung einer Verbindung zu einem relativ zur Wickelvorrichtung beweglichen Anschluß aufwickelbar ist, daß ein trommelseitiges Ende des Verbindungskabels und ein trommelseitiges Ende des Anschlußkabels eine direkte Verbindungsstelle bilden, daß das Verbindungskabel eine Schlaufe bildet, daß der Wickelbereich des Verbindungskabels von einem Kabelgehäuse umgeben ist, in welchem auch die Schlaufe bei jeder Wickelstellung der Wickelvorrichtung ausreichend Platz findet, und daß das andere Ende des Verbindungskabels durch einen feststehenden Teil des Kabelgehäuses aus diesem herausgeführt und an diesem festgelegt ist.

Diese Ausgestaltung ermöglicht ein einfaches Auf- und Abwickeln des Anschlußkabels auf die Wickeltrommel, und zwar dadurch, daß die Wickeltrommel gedreht wird. Das Anschlußkabel wird dabei in dem dafür vorgesehenen Wikkelbereich aufwickelt. Ferner hat diese Ausgestaltung den Vorteil, daß auf jegliche Schleifringkontakte verzichtet wird. In der Regel sind diese vorgesehen, wenn Leitungen auf Wickeltrommeln aufgewickelt werden, die von feststehenden Anschlüssen zu beweglichen Anschlüssen geführt sind, um ein Verdrillen der Leitungen zu verhindern. Das Verdrillen der Leitungen kann auch ohne Schleifringkontakte verhindert werden, weil anstelle eines Schleifringkontakts ein fest mit dem Anschlußkabel trommelseitig verbundenes Verbindungskabel, das mit seinem anderen Ende wiederum fest an dem Hochdruckreinigungsgerät angeordnet ist, eine Schlaufe bildet.

Derartige Wickelvorrichtungen zum Auf- und Abwickeln von Leitungen, die von feststehenden Anschlüssen zu beweglichen Anschlüssen, z.B. an einem Kran, geführt sind, sind an sich beispielsweise aus der DE 29 00 187 A1 bekannt. Während des Auf- und Abwickelns des Anschlußkabels wird gleichzeitig die Schlaufe des Verbindungskabels auf einen separaten Wickelbereich der Wikkeltrommel auf- und abgewickelt. Das Verbindungskabel verdrillt sich dabei nicht, auf Schleifringkontakte kann somit verzichtet werden.

Ein weiterer Vorteil der vorliegenden Erfindung ist die Anordnung des Verbindungskabels in einem Gehäuse. Das Gehäuse dient dabei dem Verbindungskabel als Schutz gegen jedwede äußeren Einflüsse, beispielsweise Verschmutzung und Kontakt mit Flüssigkeiten. Auf diese Weise ist es möglich, alle elektrischen Verbindungsstellen im Gehäuse des Hochdruckreinigungsgeräts anzuordnen. Ferner dient das Kabelgehäuse dazu, das Verbindungskabel während des Auf- und Abwickelns räumlich zu begrenzen, wodurch gleichzeitig ein sicheres und geordnetes Auf- und Abwickeln des Verbindungskabels möglich ist.

Die Ausgestaltung der Kabeltrommeln mit zwei schichtweise übereinandergewickelten Kabeln macht es möglich, eine platzsparende Anordnung der Wickelanordnung zu finden, die für den speziellen Einsatz in einem Hochdruckreinigungsgerät besonders geeignet ist. Die gesamte Wickelanordnung erhält somit einen scheibenförmigen Aufbau, der sich gut in das Gehäuse eines Hochdruckreinigers integrieren läßt.

Bei einer bevorzugten Ausführungsform der Erfindung ist vorgesehen, daß das Kabelgehäuse den Wickelbereich des Verbindungskabels in radialer Richtung so begrenzt, daß die maximal abgewickelte Schlaufe an der radialen Begrenzung des Wickelbereiches anliegt. Das Verbindungskabel wird beim Abwickeln des Anschlußkabels gleichzeitig mit abgewickelt. Ist die maximale Erstreckung des Kabelgehäuses in radialer Richtung begrenzt, so wickelt sich das Verbindungskabel von der Wickeltrommel ab und gleichzeitig an der inneren Umfangswandung des den Wikkelbereich umgebenden Kabelgehäuses auf. Im vorliegenden Fall wird dadurch eine minimale Größe des Kabelgehäuses festgelegt. Die Wickelvorrichtung nimmt auf diese Weise einen minimalen Raum ein.

Grundsätzlich kann vorgesehen sein, daß die Wickeltrommel einen im wesentlichen radialsymmetrischen Querschnitt aufweist. Auf Wickeltrommeln mit radialsymmetrischem, beispielsweise einem runden Querschnitt, lassen sich die Kabel besonders leicht und sauber aufwikkeln.

Vorteilhaft ist es, wenn das Kabelgehäuse einen im wesentlichen radialsymmetrischen Querschnitt aufweist. Da sich beim Abwickeln des Verbindungskabels von der Wikkeltrommel das Verbindungskabel an der inneren Umfangswandung des Kabelgehäuses aufwickelt, ist ein sauberes Ab- bzw. Aufwickeln gerade dann gewährleistet, wenn der Querschnitt des Kabelgehäuses radialsymmetrisch, beispielsweise kreisförmig ist.

Gemäß einer bevorzugten Ausführungsform ist vorgesehen, daß die Wickeltrommel im wesentlichen radialsymmetrisch von dem Kabelgehäuse umgeben ist. Auf diese Weise wird ein Abstand zwischen der Wickeltrommel und der inneren Umfangswandung des Kabelgehäuses festgelegt, wodurch das Verbindungskabel besonders sauber und störungsfrei auf- und abgewickelt werden kann.

Günstig ist es, wenn der Trommeldurchmesser des Wickelbereiches des Anschlußkabels größer ist als der Trommeldurchmesser des Wickelbereiches, der das Verbindungskabel aufnimmt. Durch einen kleinen Trommeldurchmesser des Wickelbereiches des Verbindungskabels kann die Baugröße der Wickelvorrichtung zusätzlich minimiert werden.

Besonders vorteilhaft ist es, wenn das Kabelgehäuse spritzwassergeschützt ist. Beim Betrieb des Hochdruckreinigungsgeräts ist es nahezu unvermeidlich, daß das Gerät mit Spritzwasser in Berührung kommt. Hierfür müssen elektrische Bauteile von vorn herein wasserdicht oder zumindest spritzwassergeschützt in einem Gehäuse untergebracht sein. Bei der vorliegenden Erfindung ergibt sich eine zusätzliche Verbindungsstelle, nämlich zwischen dem Anschlußkabel und dem Verbindungskabel. Für die Betriebssicherheit ist deshalb ein spritzwassergeschütztes Kabelgehäuse des Verbindungskabels wünschenswert.

Bei einer bevorzugten Ausführungsform der vorliegenden Erfindung ist vorgesehen, daß das Verbindungskabel in einer Ausgangsstellung gleichsinnig mit dem Anschlußkabel vollständig auf die Wickeltrommel aufgewickelt ist, in einer Mittelstellung unter Bildung einer maximalen Schlaufe vollständig abgewickelt ist und bei der weiteren Bewegung der Wickeltrommel unter Einholung der Schlaufe mit umgekehrtem Wickelsinn wieder vollständig aufgewickelt wird. Als besonderer Vorteil ergibt sich dabei, daß das Verbindungskabel kürzer als das Anschlußkabel ist. Dies verringert die Kosten für die Anschlußkabel sowie die Baugröße der Wickelvorrichtung. Durch die Verkürzung des Verbindungskabels verringert sich zusätzlich die Schlaufengröße, wodurch das Auf- und Abwickeln des Verbindungskabels noch störunanfälliger realisiert werden kann.

Günstig ist es, wenn das Verbindungskabel etwa die halbe Länge des Anschlußkabels aufweist. Bei halber Länge des Verbindungskabels im Vergleich zum Anschlußkabel werden sowohl das Verbindungskabel als auch das Kabelgehäuse absolut minimiert.

Vorteilhaft ist es, wenn der Trommelquerschnitt des Wickelbereichs des Verbindungskabels eine herzförmige Einbuchtung aufweist und wenn das eine Ende des Verbindungskabels über die Einbuchtung zu der Verbindungsstelle mit dem Anschlußkabel geführt ist. Durch die herzförmige Einbuchtung kann das Verbindungskabel vom Umfang der Trommel des Wickelbereichs in das Zentrum der Trommel geführt werden, ohne an irgendeiner Stelle abzuknicken. Die herzförmige Einbuchtung bietet darüber hinaus den Vorteil, daß bei reduzierter Kabellänge des Verbindungskabels das Verbindungskabel in beiden Wikkelrichtungen knickfrei aufgewickelt werden kann.

Grundsätzlich kann vorgesehen sein, daß das Verbindungskabel von einem Flachbandkabel gebildet wird. Flachbandkabel lassen sich besonders sauber und gleichmäßig auf Wickeltrommeln aufwickeln, außerdem minimieren sie die radiale Ausdehnung eines aufgewickelten Kabels durch ihren länglichen Querschnitt.

Günstig ist es, wenn das Anschlußkabel von einem Rundkabel gebildet wird. Das Anschlußkabel kann aus der Wickelvorrichtung heraus zu einer Spannungsversorgungseinheit gezogen werden, wobei es günstig ist, wenn es in alle Richtungen gleich gut abgebogen werden kann. Dies ist bei einem Rundkabel der Fall.

Bei einer besonders bevorzugten Ausführungsform der Erfindung kann vorgesehen sein, daß die Wickeltrommel relativ zum Gehäuse durch eine Spannvorrichtung in der Ausgangsstellung gehalten werden kann. Die Spannvorrichtung ermöglicht es, daß sich das Anschlußkabel selbständig in der Wickelvorrichtung wieder aufwickelt, wenn der Zug auf das Anschlußkabel nachläßt. Dies ist besonders bequem und sorgt stets dafür, daß das Anschlußkabel mit der minimal erforderlichen Länge abgewickelt ist.

Günstig ist es dabei, wenn die Spannvorrichtung durch eine Rollfeder gebildet wird, deren eines Ende an der Wickeltrommel und das andere am Gehäuse festgelegt ist. Eine Rollfeder paßt sich besonders gut an die Bauform der Wickeltrommel an.

Weiterhin kann vorgesehen sein, daß an der Wickeltrommel eine Rücklaufsperre vorgesehen ist. Durch die Rücklaufsperre wird ein unbeabsichtigtes Wiederaufwickeln des Anschlußkabels verhindert. Das einmal abgewickelte Anschlußkabel bleibt auf diese Weise in der gewünschten Länge abgewickelt.

Grundsätzlich kann vorgesehen sein, daß das eine Ende des Verbindungskabels mit der Antriebseinheit verbunden ist. Das Verbindungskabel stellt die Verlängerung des Anschlußkabels dar, und somit dienen beide Kabel als Verbindung zwischen der Antriebseinheit und der Spannungsversorgungseinheit.

Besonders vorteilhaft ist es, wenn das Kabelgehäuse ein Teil des Gehäuses ist. Auf diese Weise kann auf ein separates Kabelgehäuse verzichtet werden, wenn es direkt in das Gehäuse des Hochdruckreinigungsgeräts integriert wird. Dies minimiert den Materialbedarf sowie die Baugröße der Wickelvorrichtung.

Die nachfolgende Beschreibung einer bevorzugten Ausführungsform der Erfindung dient im Zusammenhang mit der Zeichnung der näheren Erläuterung. Es zeigen:
- Figur 1:: einen Längsschnitt durch eine in ein Hochdruckreinigungsgerät integrierte Wickelvorrichtung;
- Figur 2:: eine Querschnittsansicht entlang Linie 2-2 aus Figur 1 durch das Kabelgehäuse des Verbindungskabels im aufgewickelten Zustand des Anschlußkabels;
- Figur 3:: eine Querschnittsansicht ähnlich Figur 2, jedoch bei vollständig abgewikkeltem Verbindungskabel;
- Figur 4:: eine Querschnittsansicht ähnlich Figur 2, jedoch mit vollständig abgewikkeltem Anschlußkabel und in entgegengesetzter Richtung aufgewickeltem Verbindungskabel.

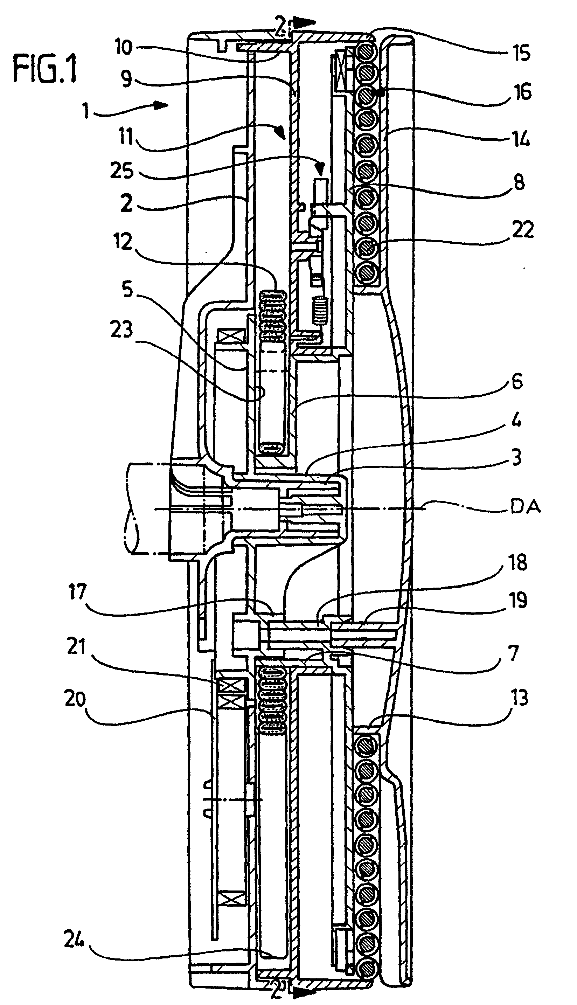

Eine Kabeltrommel 1 eines nicht näher dargestellten Hochdruckreinigungsgeräts ist in Figur 1 zu sehen. Eine quer zur Drehachse DA der Kabeltrommel 1 angeordnete innere Trommelbegrenzungswand 2 weist einen zylinderförmigen Vorsprung auf, der als ein Trommellager 3 dient und dessen Symmetrieachse die Drehachse DA festlegt. Das Trommellager 3 wird auf seiner der Trommelbegrenzungswand 2 abgewandten Seite formschlüssig von einer becherförmigen Trommelnabe 4 umgeben, die relativ zum Trommellager 3 um die Drehachse DA verdrehbar ist. In der Ebene der inneren Trommelbegrenzungswand 2 erstreckt sich von der Trommelnabe 4 in radialer Richtung ein kreisscheibenförmiger Vorsprung, der eine Nabenscheibe 5 bildet. Die innere Trommelbegrenzungswand 2 ist im Bereich der radialen Erstreckung der Nabenscheibe 5 in Richtung der Drehachse von der Nabenscheibe 5 weg entgegen der becherförmigen Öffnung der Trommelnabe 4 versetzt und bildet dadurch eine ringförmige Aussparung.

Auf der der Aussparung abgewandten Seite der Nabenscheibe 5 ist auf der Nabenscheibe 5 eine kreisscheibenförmige Trommelinnenscheibe 6 angeordnet, deren Außendurchmesser etwa zweimal dem Durchmesser der Trommelnabe 4 entspricht und die durch eine radiale hülsenförmige Umfangswandung 7 mit der Nabenscheibe 5 verbunden ist. Die Umfangswandung 7 erstreckt sich in Richtung der Drehachse von der Nabenscheibe 5 weg etwa 1,5 mal weiter über die Trommelinnenscheibe 6 hinaus als der Abstand Nabenscheibe 5/Trommelinnenscheibe 6 beträgt. Auf der der Nabenscheibe 5 abgewandten Seite der Umfangswandung 7 weist diese einen radialen kreisscheibenförmigen Vorsprung auf, der eine Begrenzungsscheibe 8 bildet, die parallel zum äußeren Bereich der inneren Trommelbegrenzungswand 2 und der Nabenscheibe 5 verläuft. Die Begrenzungsscheibe 8 erstreckt sich dabei in radialer Richtung von der Trommelnabe 4 soweit wie die innere Trommelbegrenzungswand 2.

Parallel zur Begrenzungsscheibe 8 und zur inneren Trommelbegrenzungswand 2 verläuft eine Trennwand 9, die auf ihrem der Trommelnabe zugewandten inneren Umfang nahtlos und nahezu über den gesamten Bereich zwischen Trommelinnenscheibe 6 und Begrenzungsscheibe 8 an die Umfangswandung 7 anschließt. Trommelinnenscheibe 6 und Trennwand 9 verlaufen in der gleichen Ebene. In ihrem radialen Außenbereich weist die Trennwand 9 einen in Richtung der Drehachse auf die innere Trommelbegrenzungswand 2 zu verlaufenden, sich über den vollen Umfang erstreckenden, hülsenartigen Vorsprung auf, der einen entgegengesetzt abstehenden ähnlichen Vorsprung der inneren Trommelbegrenzungswand 2 untergreift. Diese beiden Vorsprünge bilden eine Radialwand 10 eines zusätzlich durch die Nabenscheibe 5, den äußeren Bereich der inneren Trommelbegrenzungswand 2, der Trennwand 9 und der Umfangswandung 7 begrenzten Wickelraums 11 eines Flachbandkabels 12. Das Flachbandkabel 12 ist dabei auf den im wesentlichen kreisförmigen Querschnitt der Umfangswandung 7 schichtweise aufgewickelt.

Weiterhin ist auf der dem Wickelraum 11 abgewandten Seite der Begrenzungsscheibe 8 über einen als Abstandhalter wirkenden hülsenförmigen Ring 13 eine Trommelaußenscheibe 14 angeordnet. Die Trommelaußenscheibe 14 verläuft dabei parallel zur Begrenzungsscheibe 8. Durch die Trommelaußenscheibe 14, den Ring 13, die Begrenzungsscheibe 8 und einen in vergleichbarer Form zur Radialwand 10 in entgegengesetzter Richtung zu dieser abstehenden Vorsprung, der einen Gehäuserand 15 bildet, wird ein Wickelbereich 16 festgelegt. Ein exzentrisch an der Nabenscheibe 5 angeordneter Stutzen 17 dient zur Aufnahme eines ebenfalls zylindrischen Verbindungsstücks 18, das von der Begrenzungsscheibe 8 in Richtung der Nabenscheibe 5 absteht und sich auf seiner der Trommelaußenscheibe 14 zugewandten Seite einstufig erweitert und der Aufnahme eines Zapfens 19 dient, der mit der Trommelaußenscheibe 14 auf deren der Begrenzungsscheibe 8 zugewandten Seite verbunden ist. Die Symmetrieachsen von Stutzen 17, Verbindungsstück 18 und Zapfen 19 verlaufen parallel zur Drehachse. Die letztgenannten Teile können gegeneinander verklebt oder mit einer nicht näher dargestellten Schraube gesichert sein.

An der inneren Trommelbegrenzungswand 2 ist auf ihrer dem Wickelraum 11 abgewandten Seite eine Vorratsrolle 20 für eine Rollfeder 21 drehbar gelagert angeordnet. Das eine Ende der Rollfeder ist dabei mit der Vorratsrolle 20, das andere Ende mit der Nabenscheibe 5 verbunden. Dadurch wird die Nabenscheibe 5 bei Verdrehung aus einer Ausgangsstellung heraus durch die Federkraft der Rollfeder 21 auf eine einem Fachmann auf dem Gebiet der Kabeltrommeln bekannten Art und Weise wieder in die Ausgangsstellung zurückgedreht.

Die Kabeltrommel 1 weist einen Wickelraum 11 und einen Wickelbereich 16 auf, deren radiale innere Begrenzungen relativ zueinander fixiert sind und bei einer Verdrehung der Nabenscheibe 5 bzw. der Trommelnabe 4 um das Trommellager 3 gleichsinnig verdreht werden. Der Wikkelraum 11 dient zur Aufnahme des Flachbandkabels 12, der Wickelbereich 16 zur Aufnahme eines Rundkabels 22. Das innere Ende des Flachbandkabels 12 ist über eine herzförmige Einbuchtung 23 der Umfangswandung 7, die ansonsten einen im wesentlichen runden Querschnitt aufweist, nach innen geführt. Ebenso ist das innere Ende des Rundkabels 22 an einer nicht dargestellten Durchbrechung des Rings 13 in Richtung der Drehachse nach innen geführt. Diese beiden Enden des Flachbandkabels und des Rundkabels 22 sind auf eine nicht näher dargestellte Weise elektrisch leitend miteinander verbunden, isoliert und an den rotierenden Teilen der Kabeltrommel 1 festgelegt. Das andere Ende des Flachbandkabels 12 ist an einer Stelle der Radialwand 10 durch eine Durchführung 24 aus dem Wickelraum 11 herausgeführt. Die Durchführung 24 dient gleichzeitig der Fixierung des Flachbandkabels an der Radialwand 10.

Eine insgesamt mit dem Bezugszeichen 25 versehene Rücklaufsperre, die zwischen der Trennwand 9 und der relativ zu dieser verdrehbaren Begrenzungsscheibe 8 angeordnet ist, verhindert auf eine dem einschlägigen Fachmann auf dem Gebiet der Kabeltrommeln bekannten Art und Weise das Rücklaufen der Kabeltrommel 1 in die Ausgangsstellung entgegen der durch die Rollfeder 21 ausgeübten Federkraft.

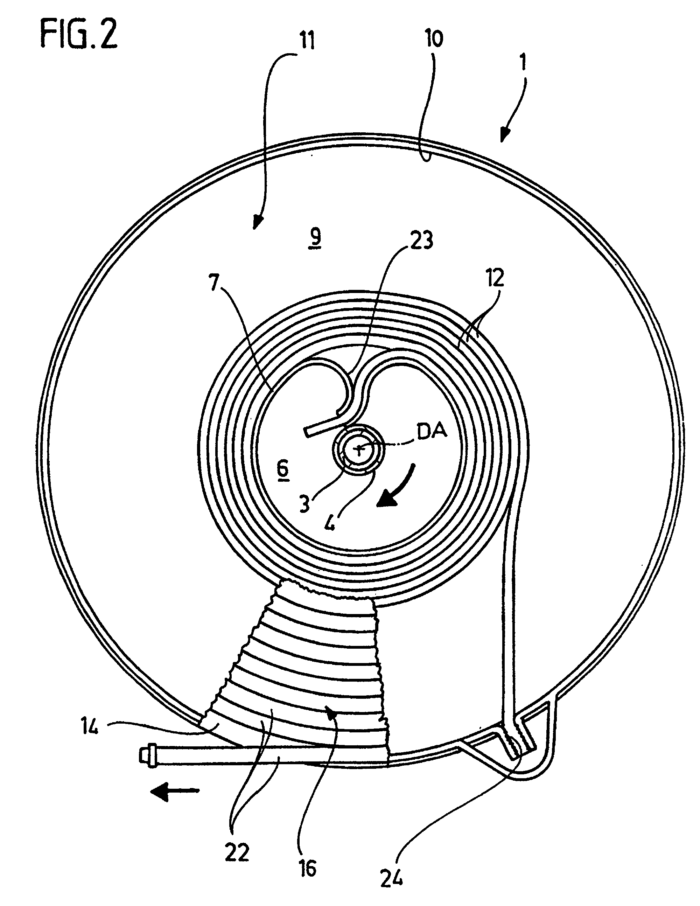

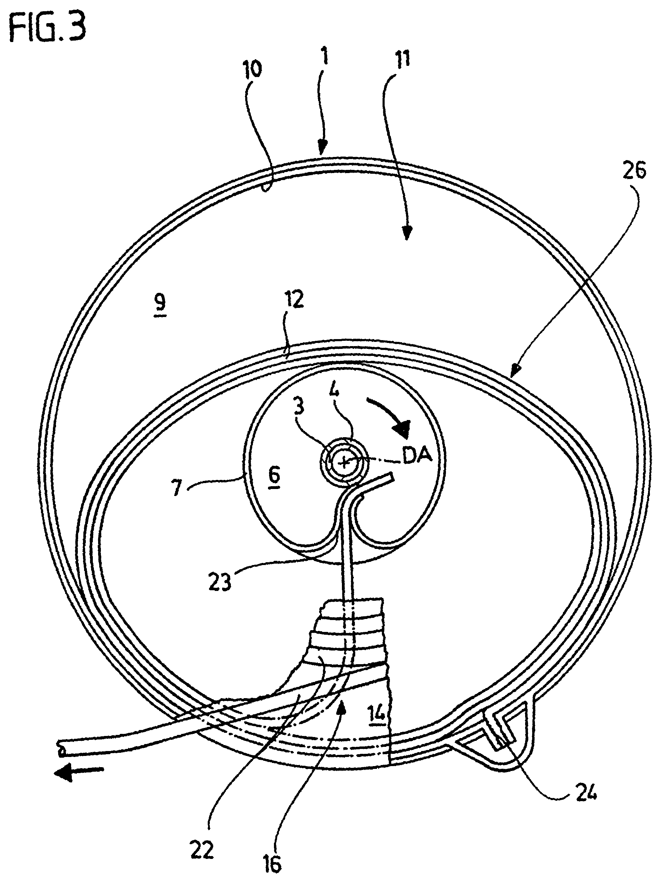

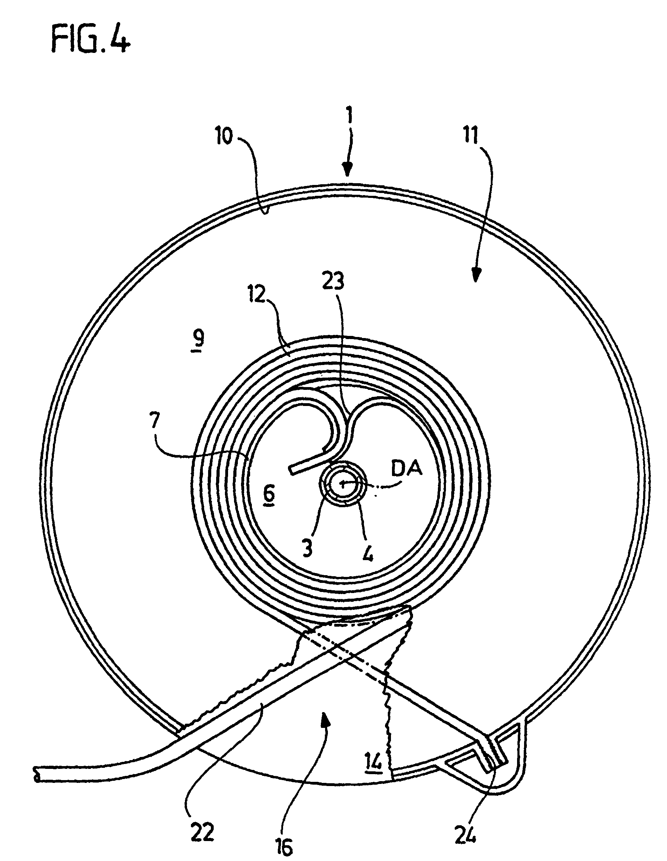

Der Vorgang des Abwickelns bzw. Aufwickelns des als Rundkabel 22 ausgebildeten Anschlußkabels des Hochdruckreinigungsgeräts ist in den Figuren 2 bis 4 zu sehen. In einer Ausgangsstellung, die in Figur 2 dargestellt ist, ragt das freie Ende des Anschlußkabels aus dem Gehäuse der Kabeltrommel 1 heraus. Das Flachbandkabel 12 ist vollständig auf der Umfangswandung 7 des Wickelraums 11 aufgewickelt. Es ist auch möglich, daß im Ausgangszustand die äußerste Wickellage des Flachbandkabels 12 nicht dicht auf den darunterliegenden Lagen aufgewickelt ist, sondern diese darunterliegenden aufgewickelten Lagen lose umgibt. Zieht der Betreiber des Hochdruckreinigungsgeräts das Anschlußkabel aus der Kabeltrommel 1 heraus, wickelt sich gleichzeitig das Flachbandkabel 12 ab. Es bildet eine mehr oder weniger lose Schlaufe 26. Die abgewickelte Schlaufe 26 wird außen begrenzt durch die Radialwand 10. Ihre maximale Größe erreicht die Schlaufe 26 dann, wenn das Flachbandkabel 12 vollständig von der Umfangswandung 7 abgewickelt ist. Diese als mittlere Abwickelstellung der Kabeltrommel bezeichnete Stellung ist in Figur 3 dargestellt. Wird das Anschlußkabel weiter abgewickelt, drehen sich die beweglichen Teile der Kabeltrommel 1 insgesamt weiter in Richtung des Uhrzeigersinns. Das Flachbandkabel wird im folgenden bei weiterer Verdrehung aber entgegen dem Uhrzeigersinn auf die Umfangswandung 7 aufgewickelt. In einer Endposition ist das Anschlußkabel vollständig abgewickelt, das Flachbandkabel 12 wieder vollständig, aber entgegen dem Uhrzeigersinn auf der Umfangswandung 7 aufgewickelt.

Jede Wickelstellung der Kabeltrommel 1 kann durch die Rücklaufsperre 25 fixiert werden. Zum leichteren Aufwickeln des Anschlußkabels dient die schon weiter oben beschriebene Rollfeder. Der Aufwickelvorgang läuft umgekehrt zu dem oben beschriebenen Abwickelvorgang ab.

Die den Wickelraum 11 umgebenden Teile der Kabeltrommel 1 sind relativ zueinander so angeordnet und abgedichtet, daß der Wickelraum 11 spritzwassergeschützt ist.

Die Kabeltrommel 1 kann in ihrer Gesamtheit in das Gehäuse eines Hochdruckreinigungsgeräts integriert sein. Andererseits besteht die Möglichkeit, daß die innere Trommelbegrenzungswand 2 ein Teil des Gehäuses des Hochdruckreinigungsgeräts ist, wodurch Teile des Hochdruckreinigungsgeräts gleichzeitig auch Teile der Kabeltrommel 1 bilden können.

## Patentansprüche

1. Hochdruckreinigungsgerät mit einem Gehäuse, mit einer Antriebseinheit und mit einer Wickelvorrichtung (1) zum Auf- und Abwickeln von Leitungen, die von feststehenden Anschlüssen zu beweglichen Anschlüssen geführt sind, **dadurch gekennzeichnet, daß** die Wickelvorrichtung (1) eine Wickeltrommel (4, 5, 7, 13) umfaßt, daß die Wickeltrommel (4, 5, 7, 13) mindestens zwei getrennte Wickelbereiche (11, 16) aufweist, die nur so breit sind, daß darin Kabel einlagig schichtweise übereinanderliegend aufwickelbar sind, daß in dem einen Wickelbereich (11) ein elektrisches Verbindungskabel (12) zur Herstellung einer Verbindung zu einem relativ zur Wickelvorrichtung (1) feststehenden Anschluß aufwickelbar ist, daß in dem anderen Wickelbereich (16) ein elektrisches Anschlußkabel (22) zur Herstellung einer Verbindung zu einem relativ zur Wickelvorrichtung (1) beweglichen Anschluß aufwickelbar ist, daß ein trommelseitiges Ende des Verbindungskabels (12) und ein trommelseitiges Ende des Anschlußkabels (22) eine direkte Verbindungsstelle bilden, daß das Verbindungskabel (12) eine Schlaufe (26) bildet, daß der Wickelbereich (11) des Verbindungskabels (12) von einem Kabelgehäuse (2, 7, 9, 10) umgeben ist, in welchem auch die Schlaufe (26) bei jeder Wickelstellung der Wickelvorrichtung (1) ausreichend Platz findet, und daß das andere Ende des Verbindungskabels (12) durch einen feststehenden Teil (24) des Kabelgehäuses (2, 7, 9, 10) aus diesem herausgeführt und an diesem festgelegt ist.

2. Hochdruckreinigungsgerät nach Anspruch 1, **dadurch gekennzeichnet, daß** das Kabelgehäuse (2, 7, 9, 10) den Wickelbereich (11) des Verbindungskabels (12) in radialer Richtung so begrenzt, daß die maximal abgewickelte Schlaufe (26) an der radialen Begrenzung (10) des Wickelbereiches (11) anliegt.

3. Hochdruckreinigungsgerät nach einem der voranstehenden Ansprüche, **dadurch gekennzeichnet, daß** die Wickeltrommel (4, 5, 7, 13) einen im wesentlichen radialsymmetrischen Querschnitt aufweist.

4. Hochdruckreinigungsgerät nach einem der voranstehenden Ansprüche, **dadurch gekennzeichnet, daß** das Kabelgehäuse (2, 7, 9, 10) einen im wesentlichen radialsymmetrischen Querschnitt aufweist.

5. Hochdruckreinigungsgerät nach einem der voranstehenden Ansprüche, **dadurch gekennzeichnet, daß** die Wickeltrommel (4, 5, 7, 13) im wesentlichen radialsymmetrisch von dem Kabelgehäuse (2, 7, 9, 10) umgeben ist.

6. Hochdruckreinigungsgerät nach einem der voranstehenden Ansprüche, **dadurch gekennzeichnet, daß** der Trommeldurchmesser des Wickelbereiches (16) des Anschlußkabels (22) größer ist als der Trommeldurchmesser des Wickelbereiches (11), der das Verbindungskabel (12) aufnimmt.

7. Hochdruckreinigungsgerät nach einem der voranstehenden Ansprüche, **dadurch gekennzeichnet, daß** das Kabelgehäuse (2, 7, 9, 10) spritzwassergeschützt ist.

8. Hochdruckreinigungsgerät nach einem der voranstehenden Ansprüche, **dadurch gekennzeichnet, daß** das Verbindungskabel (12) in einer Ausgangsstellung gleichsinnig mit dem Anschlußkabel (22) vollständig auf die Wickeltrommel (4, 5, 7, 13) aufgewikkelt ist, in einer Mittelstellung unter Bildung einer maximalen Schlaufe (26) vollständig abgewikkelt ist und bei der weiteren Bewegung der Wickeltrommel (4, 5, 7, 13) unter Einholung der Schlaufe (26) mit umgekehrtem Wickelsinn wieder vollständig aufgewickelt wird.

9. Hochdruckreinigungsgerät nach einem der voranstehenden Ansprüche, **dadurch gekennzeichnet, daß** das Verbindungskabel (12) etwa die halbe Länge des Anschlußkabels (22) aufweist.

10. Hochdruckreinigungsgerät nach einem der voranstehenden Ansprüche, **dadurch gekennzeichnet, daß** der Trommelquerschnitt des Wickelbereichs (11) des Verbindungskabels (12) eine herzförmige Einbuchtung (23) aufweist und daß das eine Ende des Verbindungskabels (12) über die Einbuchtung (23) zu der Verbindungsstelle mit dem Anschlußkabel (22) geführt ist.

11. Hochdruckreinigungsgerät nach einem der voranstehenden Ansprüche, **dadurch gekennzeichnet, daß** das Verbindungskabel (12) von einem Flachbandkabel gebildet wird.

12. Hochdruckreinigungsgerät nach einem der voranstehenden Ansprüche, **dadurch gekennzeichnet, daß** das Anschlußkabel (22) von einem Rundkabel gebildet wird.

13. Hochdruckreinigungsgerät nach einem der voranstehenden Ansprüche, **dadurch gekennzeichnet, daß** die Wickeltrommel (4, 5, 7, 13) relativ zum Gehäuse (2) durch eine Spannvorrichtung (20, 21) in der Ausgangsstellung gehalten werden kann.

14. Hochdruckreinigungsgerät nach Anspruch 13, **dadurch gekennzeichnet, daß** die Spannvorrichtung durch eine Rollfeder (21) gebildet wird, deren eines Ende an der Wickeltrommel (4, 5, 7, 13) und das andere am Gehäuse (2) festgelegt ist.

15. Hochdruckreinigungsgerät nach einem der voranstehenden Ansprüche, **dadurch gekennzeichnet, daß** an der Wickeltrommel (4, 5, 7, 13) eine Rücklaufsperre (25) vorgesehen ist.

16. Hochdruckreinigungsgerät nach einem der voranstehenden Ansprüche, **dadurch gekennzeichnet, daß** das eine Ende des Verbindungskabels (12) mit der Antriebseinheit verbunden ist.

17. Hochdruckreinigungsgerät nach einem der voranstehenden Ansprüche, **dadurch gekennzeichnet, daß** das Kabelgehäuse (2, 7, 9, 10) ein Teil des Gehäuses ist.

## Claims

1. A high-pressure cleaning appliance comprising a housing, a drive unit and a winding mechanism (1) for winding up and unwinding lines extending from fixed terminals to movable terminals, **characterised in that** the winding mechanism (1) comprises a winding drum (4, 5, 7, 13), **in that** the winding drum (4, 5, 7, 13) has at least two separate winding regions (11, 16) which are only wide enough for cables to be wound up therein in single layers on top of one another, **in that** an electrical connecting cable (12) for producing a connection to a terminal which is fixed relative to the winding mechanism (1) can be wound up in one winding region (11), **in that** an electrical supply cable (22) for producing a connection to a terminal which is movable relative to the winding mechanism (1) can be wound up in the other winding region (16), **in that** an end of the connecting cable (12) on the drum and an end of the supply cable (22) on the drum form a direct connecting point, **in that** the connecting cable (12) forms a loop (26), **in that** the winding region (11) of the connecting cable (12) is surrounded by a cable housing (2, 7, 9, 10) in which there is also sufficient room for the loop (26) in any winding position of the winding mechanism (1), and **in that** the other end of the connecting cable (12) is guided out of the cable housing (2, 7, 9, 10) through a fixed part (24) thereof and is secured to the cable housing (2, 7, 9, 10).

2. A high-pressure cleaning appliance according to claim 1, **characterised in that** the cable housing (2, 7, 9, 10) radially bounds the winding region (11) of the connecting cable (12) so that, when the loop (26) is unwound to its maximum extent, it rests against the radial boundary (10) of the winding region (11).

3. A high-pressure cleaning appliance according to either one of the preceding claims, **characterised in that** the winding drum (4, 5, 7, 13) has a substantially radially symmetrical cross-section.

4. A high-pressure cleaning appliance according to any one of the preceding claims, **characterised in that** the cable housing (2, 7, 9, 10) has a substantially radially symmetrical cross-section.

5. A high-pressure cleaning appliance according to any one of the preceding claims, **characterised in that** the winding drum (4, 5, 7, 13) is substantially radially symmetrically surrounded by the cable housing (2, 7, 9, 10).

6. A high-pressure cleaning appliance according to any one of the preceding claims, **characterised in that** the drum diameter of the winding region (16) of the supply cable (22) is larger than the drum diameter of the winding region (11) receiving the connecting cable (12).

7. A high-pressure cleaning appliance according to any one of the preceding claims, **characterised in that** the cable housing (2, 7, 9, 10) is splash-proof.

8. A high-pressure cleaning appliance according to any one of the preceding claims, **characterised in that** in a starting position the connecting cable (12) is fully wound onto the winding drum (4, 5, 7, 13) in the same direction as the supply cable (22), in an intermediate position is fully unwound to form a maximum loop (26) and, during further movement of the winding drum (4, 5, 7, 13), is once more fully wound up in the reverse winding direction, thereby drawing in the loop (26).

9. A high-pressure cleaning appliance according to any one of the preceding claims, **characterised in that** the connecting cable (12) is approximately half the length of the supply cable (22).

10. A high-pressure cleaning appliance according to any one of the preceding claims, **characterised in that** the drum cross-section of the winding region (11) of the connecting cable (12) has a heart-shaped recess (23) and **in that** one end of the connecting cable (12) is guided via the recess (23) to the point of connection to the supply cable (22).

11. A high-pressure cleaning appliance according to any one of the preceding claims, **characterised in that** the connecting cable (12) is formed by a flat cable.

12. A high-pressure cleaning appliance according to any one of the preceding claims, **characterised in that** the supply cable (22) is formed by a round cable.

13. A high-pressure cleaning appliance according to any one of the preceding claims, **characterised in that** the winding drum (4, 5, 7, 13) can be held relative to the housing (2) in the starting position by a clamping device (20, 21).

14. A high-pressure cleaning appliance according to claim 13, **characterised in that** the clamping device is formed by a scroll spring (21), one end of which is fixed to the winding drum (4, 5, 7, 13) and the other end to the housing (2).

15. A high-pressure cleaning appliance according to any one of the preceding claims, **characterised in that** a rewind stop (25) is provided on the winding drum (4, 5, 7, 13).

16. A high-pressure cleaning appliance according to any one of the preceding claims, **characterised in that** one end of the connecting cable (12) is connected to the drive unit.

17. A high-pressure cleaning appliance according to any one of the preceding claims, **characterised in that** the cable housing (2, 7, 9, 10) is part of the housing.

## Revendications

1. Appareil de nettoyage à haute pression avec un carter, avec une unité d'entraînement et avec un dispositif d'enroulement (1) pour enrouler et dérouler des lignes qui sont dirigées depuis des branchements fixes vers des branchements mobiles, **caractérisé en ce que** le dispositif d'enroulement (1) comprend un tambour d'enroulement (4, 5, 7, 13), **en ce que** le tambour d'enroulement (4, 5, 7, 13) présente au moins deux zones d'enroulement séparées (11, 16) qui sont d'une largeur juste suffisante pour que des câbles puissent y être uniquement enroulés sur eux-mêmes en couches superposées, **en ce qu'**un câble de liaison électrique (12), destiné à réaliser une liaison avec un branchement fixe par rapport au dispositif d'enroulement (1), peut être enroulé dans la première zone d'enroulement (11), **en ce qu'**un câble de raccordement électrique (22), destiné à réaliser une liaison avec un branchement mobile par rapport au dispositif d'enroulement (1), peut être enroulé dans l'autre zone d'enroulement (16), **en ce qu'**une extrémité côté tambour du câble de liaison (12) et une extrémité côté tambour du câble de raccordement (22) forment un point de liaison directe, **en ce que** le câble de liaison (12) forme une boucle (26), **en ce que** la zone d'enroulement (11) du câble de liaison (12) est entourée par un carter de câble (2, 7, 9, 10) dans lequel la boucle (26) trouve également suffisamment de place dans toute position d'enroulement du dispositif d'enroulement (1), et **en ce que** l'autre extrémité du câble de liaison (12) est dirigée hors du carter de câble (2, 7, 9, 10) à travers une partie fixe (26) de ce dernier, et est fixée sur ce dernier.

2. Appareil de nettoyage à haute pression selon la revendication 1, **caractérisé en ce que** le carter de câble (2, 7, 9, 10) délimite la zone d'enroulement (11) du câble de liaison (12) en direction radiale de telle sorte que la boucle déroulée maximale (26) s'applique contre la délimitation radiale (10) de la zone d'enroulement (11).

3. Appareil de nettoyage à haute pression selon l'une des revendications précédentes, **caractérisé en ce que** le tambour d'enroulement (4, 5, 7, 13) présente une section essentiellement à symétrie radiale.

4. Appareil de nettoyage à haute pression selon l'une des revendications précédentes, **caractérisé en ce que** le carter de câble (2, 7, 9, 10) présente une section essentiellement à symétrie radiale.

5. Appareil de nettoyage à haute pression selon l'une des revendications précédentes, **caractérisé en ce que** le tambour d'enroulement (4, 5, 7, 13) est entouré essentiellement en symétrie radiale par le carter de câble (2, 7, 9, 10).

6. Appareil de nettoyage à haute pression selon l'une des revendications précédentes, **caractérisé en ce que** le diamètre de tambour de la zone d'enroulement (16) du câble de raccordement (22) est supérieur au diamètre de tambour de la zone d'enroulement (11) qui reçoit le câble de liaison (12).

7. Appareil de nettoyage à haute pression selon l'une des revendications précédentes, **caractérisé en ce que** le carter de câble (2, 7, 9, 10) est protégé contre les projections d'eau.

8. Appareil de nettoyage à haute pression selon l'une des revendications précédentes, **caractérisé en ce que**, dans une position initiale le câble de liaison (12) est totalement enroulé sur le tambour d'enroulement (4, 5, 7, 13), dans le même sens que le câble de raccordement (22), est totalement déroulé dans une position médiane, en formant une boucle maximale (26), et tandis que le mouvement du tambour d'enroulement (4, 5, 7, 13) se poursuit, est à nouveau totalement enroulé dans le sens d'enroulement inverse, la boucle (26) étant alors rentrée.

9. Appareil de nettoyage à haute pression selon l'une des revendications précédentes, **caractérisé en ce que** le câble de liaison (12) présente environ la moitié de la longueur du câble de raccordement (22).

10. Appareil de nettoyage à haute pression selon l'une des revendications précédentes, **caractérisé en ce que** la section de tambour de la zone d'enroulement (11) du câble de liaison (12) présente une échancrure (23) en forme de coeur, et **en ce qu'**une des extrémités du câble de liaison (12) est dirigée par l'intermédiaire de l'échancrure (23) vers le point de liaison avec le câble de raccordement (22).

11. Appareil de nettoyage à haute pression selon l'une des revendications précédentes, **caractérisé en ce que** le câble de liaison (12) est formé par un câble plat.

12. Appareil de nettoyage à haute pression selon l'une des revendications précédentes, **caractérisé en ce que** le câble de raccordement (22) est formé par un câble rond.

13. Appareil de nettoyage à haute pression selon l'une des revendications précédentes, **caractérisé en ce que** le tambour d'enroulement (4, 5, 7, 13) peut être maintenu dans la position initiale par rapport au carter (2) par un dispositif tendeur (20, 21).

14. Appareil de nettoyage à haute pression selon la revendication 13, **caractérisé en ce que** le dispositif tendeur est formé par un ressort à col de cygne (21) dont une extrémité est fixée sur le tambour d'enroulement (4, 5, 7, 13) et l'autre sur le carter (2).

15. Appareil de nettoyage à haute pression selon l'une des revendications précédentes, **caractérisé en ce qu'**un dispositif antiretour (25) est prévu sur le tambour d'enroulement (4, 5, 7, 13).

16. Appareil de nettoyage à haute pression selon l'une des revendications précédentes, **caractérisé en ce qu'**une des extrémités du câble de liaison (12) est reliée à l'unité d'entraînement.

17. Appareil de nettoyage à haute pression selon l'une des revendications précédentes, **caractérisé en ce que** le carter de câble (2, 7, 9, 10) est une partie du carter de l'appareil.
